# EUROPEAN PATENT APPLICATION

(11) **EP 1 630 780 A2**
(43) Date of publication of application: **01.03.2006**
(21) Application number: 05255179.3
(22) Date of filing: 23.08.2005
(51) Int. Cl.: G09G 3/34

(54) **Microelectromechanical system (MEMS) display device and method of addressing such a device**

(30) Priority: 27.08.2004 US 604893 P; 08.02.2005 US 54703
(71) Applicant: IDC, LLC, San Francisco, CA 94107 (US)
(72) Inventor: Mignard, Marc, San Jose California 95110 (US)
(74) Representative: Dunlop, Hugh Christopher

(57) **Abstract**

A system and method for staggered actuation of columns of interferometric modulators comprising microelectromechanical systems (MEMS). In one embodiment, the method determines data for actuating two or more groups of columns in the array, each group having one or more columns, and provides the data to the array to actuate two or more group of columns so that each group is activated during a group addressing period. In another embodiment, a display includes at least one driving circuit and an array comprising a plurality of interferometric modulators disposed in a plurality of columns and rows, said array being configured to be driven by said driving circuit which is configured to stagger the actuation of the plurality of columns during an array addressing period.

## Description

### Background

### Field of the Invention

The field of the invention relates to microelectromechanical systems (MEMS).

### Description of the Related Technology

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. An interferometric modulator may comprise a pair of conductive plates, one or both of which may be transparent and/or reflective in whole or part and capable of relative motion upon application of an appropriate electrical signal. One plate may comprise a stationary layer deposited on a substrate, the other plate may comprise a metallic membrane separated from the stationary layer by an air gap. Such devices have a wide range of applications, and it would be beneficial in the art to utilize and/or modify the characteristics of these types of devices so that their features can be exploited in improving existing products and creating new products that have not yet been developed.

### Summary of Certain Embodiments

The system, method, and devices of the invention each have several aspects, no single one of which is solely responsible for its desirable attributes. Without limiting the scope of this invention, its more prominent features will now be discussed briefly. After considering this discussion, and particularly after reading the section entitled "Detailed Description of Certain Embodiments" one will understand how the features of this invention provide advantages over other display devices.

In one embodiment, a device is provided. The device comprises means for displaying an image and means for applying a series of sets of column signals to said displaying means. The device further comprises means for strobing portions of said displaying means; and means for staggering the application of column signals during the process of applying at least one set of column signals.

In another embodiment, a method of driving a display comprising an array of rows and columns of display elements is provided. The method comprises applying to a first group of one or more columns of display elements a first set of one or more column signals and applying to a second group of one or more columns of display elements a second set of one or more column signals, wherein the first and second sets of column signals are applied at different times. The method further comprises strobing a first row of display elements with a first row signal.

### Brief Description of the Drawings

Figure 1 is an isometric view depicting a portion of one embodiment of an interferometric modulator display in which a movable reflective layer of a first interferometric modulator is in a released position and a movable reflective layer of a second interferometric modulator is in an actuated position.
Figure 2 is a system block diagram illustrating one embodiment of an electronic device incorporating a 3x3 interferometric modulator display.
Figure 3 is a diagram of movable mirror position versus applied voltage for one exemplary embodiment of an interferometric modulator of Figure 1.
Figure 4 is an illustration of a set of row and column voltages that may be used to drive an interferometric modulator display.
Figures 5A and 5B illustrate one exemplary timing diagram for row and column signals that may be used to write a frame of display data to the 3x3 interferometric modulator display of Figure 2.
Figure 6A is a cross section of the device of Figure 1.
Figure 6B is a cross section of an alternative embodiment of an interferometric modulator.
Figure 6C is a cross section of another alternative embodiment of an interferometric modulator.
Figure 7 is an illustration of a typical current flow on a column line during a quick change in voltage.
Figure 8 is a partial schematic diagram of one embodiment of a bi-stable display device, such as an interferometric modulator display, incorporating circuitry to stagger column actuation in the column driver circuit.
Figure 9 illustrates one exemplary timing diagram for row and column signals that may be used to write a 3x3 interferometric display using a staggered scheme for asserting a signal.
Figures 10A and 10B are system block diagrams illustrating an embodiment of a visual display device comprising a plurality of interferometric modulators.

### Detailed Description of Certain Embodiments

The following detailed description is directed to certain specific embodiments of the invention. However, the invention can be embodied in a multitude of different ways. In this description, reference is made to the drawings wherein like parts are designated with like numerals throughout. As will be apparent from the following description, the invention may be implemented in any device that is configured to display an image, whether in motion (e.g., video) or stationary (e.g., still image), and whether textual or pictorial. More particularly, it is contemplated that the invention may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

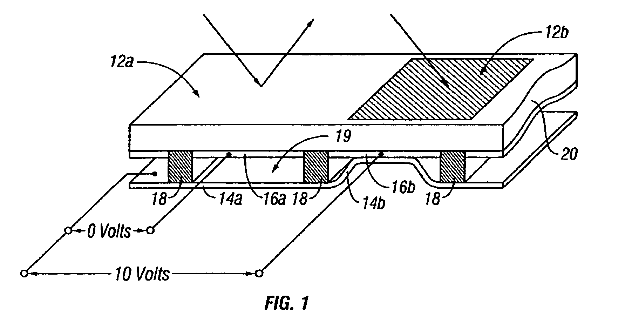

One interferometric modulator display embodiment comprising an interferometric MEMS display element is illustrated in Figure 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the released state, the movable layer is positioned at a relatively large distance from a fixed partially reflective layer. In the second position, the movable layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 1 includes two adjacent interferometric modulators 12a and 12b. In the interferometric modulator 12a on the left, a movable and highly reflective layer 14a is illustrated in a released position at a predetermined distance from a fixed partially reflective layer 16a. In the interferometric modulator 12b on the right, the movable highly reflective layer 14b is illustrated in an actuated position adjacent to the fixed partially reflective layer 16b.

The fixed layers 16a, 16b are electrically conductive, partially transparent and partially reflective, and may be fabricated, for example, by depositing one or more layers each of chromium and indium-tin-oxide onto a transparent substrate 20. The layers are patterned into parallel strips, and may form row electrodes in a display device as described further below. The movable layers 14a, 14b may be formed as a series of parallel strips of a deposited metal layer or layers (orthogonal to the row electrodes 16a, 16b) deposited on top of posts 18 and an intervening sacrificial material deposited between the posts 18. When the sacrificial material is etched away, the deformable metal layers are separated from the fixed metal layers by a defined air gap 19. A highly conductive and reflective material such as aluminum may be used for the deformable layers, and these strips may form column electrodes in a display device.

With no applied voltage, the cavity 19 remains between the layers 14a, 16a and the deformable layer is in a mechanically relaxed state as illustrated by the pixel 12a in Figure 1. However, when a potential difference is applied to a selected row and column, the capacitor formed at the intersection of the row and column electrodes at the corresponding pixel becomes charged, and electrostatic forces pull the electrodes together. If the voltage is high enough, the movable layer is deformed and is forced against the fixed layer (a dielectric material which is not illustrated in this Figure may be deposited on the fixed layer to prevent shorting and control the separation distance) as illustrated by the pixel 12b on the right in Figure 1. The behavior is the same regardless of the polarity of the applied potential difference. In this way, row/column actuation that can control the reflective vs. non-reflective pixel states is analogous in many ways to that used in conventional LCD and other display technologies.

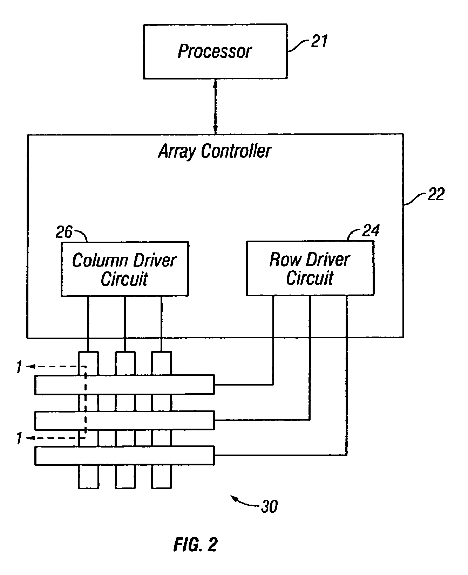

Figures 2 through 5 illustrate one exemplary process and system for using an array of interferometric modulators in a display application. Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium®, Pentium II®, Pentium III®, Pentium IV®, Pentium® Pro, an 8051, a MIPS®, a Power PC®, an ALPHA®, or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

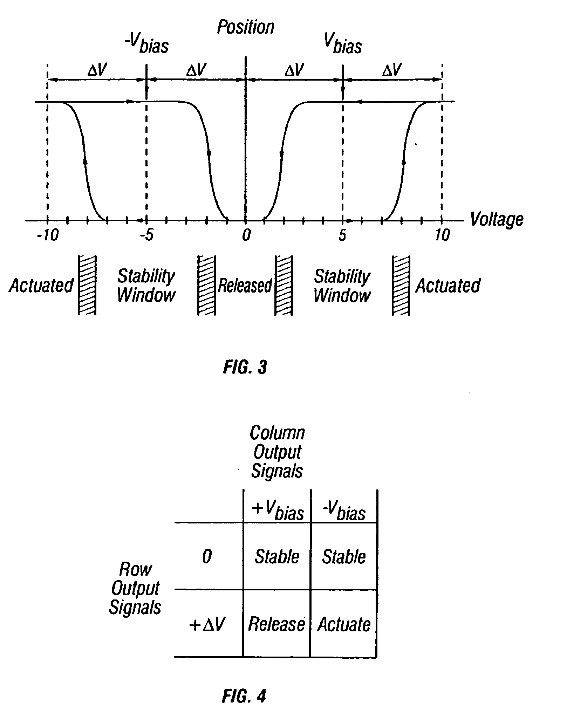

In one embodiment, the processor 21 is also configured to communicate with an array controller 22. In one embodiment, the array controller 22 includes a row driver circuit 24 and a column driver circuit 26 that provide signals to a pixel array 30. The cross section of the array illustrated in Figure 1 is shown by the lines 1-1 in Figure 2. For MEMS interferometric modulators, the row/column actuation protocol may take advantage of a hysteresis property of these devices illustrated in Figure 3. It may require, for example, a 10 volt potential difference to cause a movable layer to deform from the released state to the actuated state. However, when the voltage is reduced from that value, the movable layer maintains its state as the voltage drops back below 10 volts. In the exemplary embodiment of Figure 3, the movable layer does not release completely until the voltage drops below 2 volts. There is thus a range of voltage, about 3 to 7 V in the example illustrated in Figure 3, where there exists a window of applied voltage within which the device is stable in either the released or actuated state. This is referred to herein as the "hysteresis window" or "stability window." For a display array having the hysteresis characteristics of Figure 3, the row/column actuation protocol can be designed such that during row strobing, pixels in the strobed row that are to be actuated are exposed to a voltage difference of about 10 volts, and pixels that are to be released are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or released pre-existing state. Since each pixel of the interferometric modulator, whether in the actuated or released state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention.

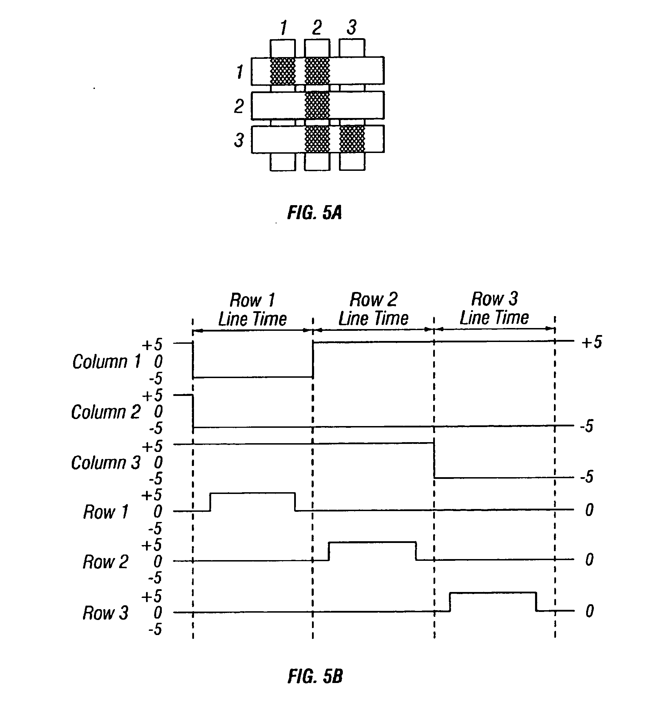

Figures 4 and 5 illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -V_{bias}, and the appropriate row to +ΔV, which may correspond to -5 volts and +5 volts respectively Releasing the pixel is accomplished by setting the appropriate column to +V_{bias}, and the appropriate row to the same +ΔV, producing a zero volt potential difference across the pixel. In those rows where the row voltage is held at zero volts, the pixels are stable in whatever state they were originally in, regardless of whether the column is at +V_{bias}, or -V_{bias·}

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or released states.

In the Figure 5A frame, pixels (1,1), (1,2), (2,2), (3,2) and (3,3) are actuated. To accomplish this, during a "line time" for row 1, columns I and 2 are set to-5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and releases the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and release pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the present invention.

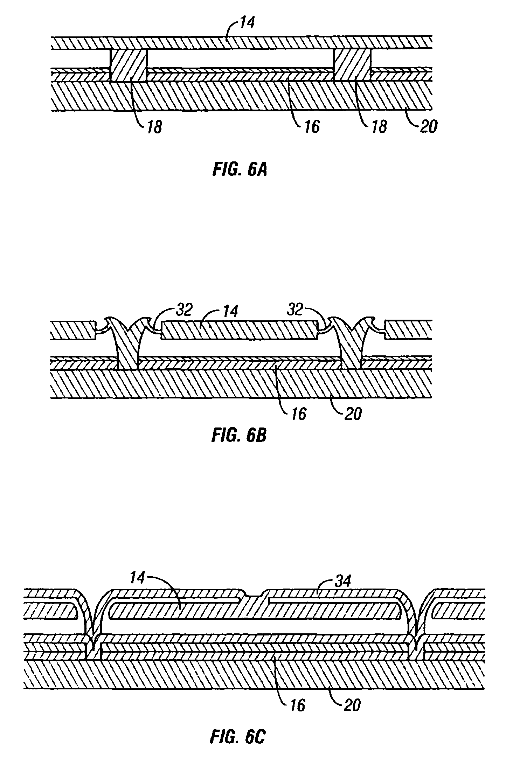

The details of the structure of interferometric modulators that operate in accordmce with the principles set forth above may vary widely. For example, Figures 6A-6C illustrate three different embodiments of the moving mirror structure. Figure 6A is a cross section of the embodiment of Figure 1, where a strip of metal material 14 is deposited on orthogonally extending supports 18. In Figure 6B, the moveable reflective material 14 is attached to supports at the corners only, on tethers 32. In Figure 6C, the moveable reflective material 14 is suspended from a deformable layer 34. This embodiment has benefits because the structural design and materials used for the reflective material 14 can be optimized with respect to the optical properties, and the structural design and materials used for the deformable layer 34 can be optimized with respect to desired mechanical properties. The production of various types of interferometric devices is described in a variety of published documents, including, for example, U.S. Published Application 2004/0051929. A wide variety of well known techniques may be used to produce the above described structures involving a series of material deposition, patterning, and etching steps.

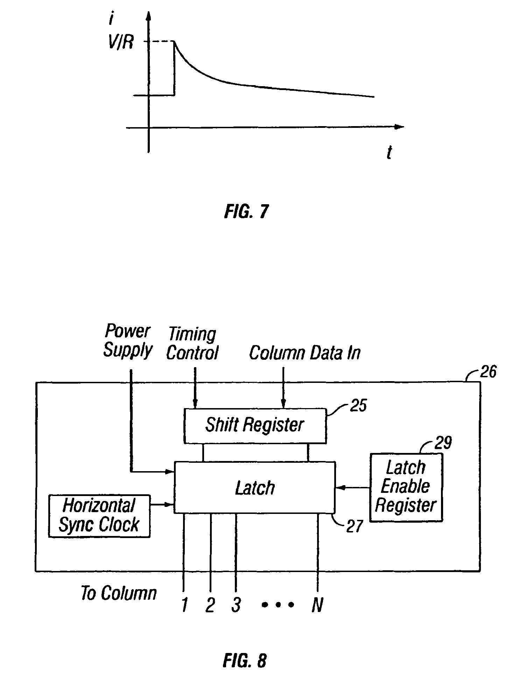

A MEMS interferometric modulator array consist of parallel conductive plates that move toward or away from each other to modulator the reflected light. Because of the capacitive nature of the pixels, a change in the voltage asserted on a column electrode can result in a large initial current flow, as illustrated in Figure 7. Producing the peak current can require large, expensive capacitors, which contribute to the expense of the MEMS interferometric modulator array and influence its commercial feasibility. Methods of driving the display which reduce or eliminate large instantaneous current flows help reduce the cost of the displays incorporating this interferometric modulator technology.

One method of reducing a large instantaneous current flow and overcome the need for large, expensive capacitors is in the manner in which voltages are asserted on the columns and rows of a display. Commercially available display column drivers assert voltages on all the columns simultaneously. Asserting voltages on all the columns simultaneously causes large instantaneous currents to flow from the supplies through the driver circuit and into the display at the time the column voltages are changed. By staggering the time when a voltage is first asserted on the column electrode of one or more columns at least slightly, the current spike drawn from the power supply can be substantially reduced.

It will be appreciated that for display driver circuits, most of the peak current can be typically supplied to a column electrode by power supply bypass capacitors. Staggering the times when the voltage signals are asserted on the column electrodes allows less expensive, smaller bypass capacitors to be used. The peak current also flows through the driver integrated circuit, which can cause ground bounce on the integrated circuit due to parasitic inductance in the internal on-chip bond wires, and even destruction of the part. Staggering the assertion of signals on the columns helps alleviate this problem.

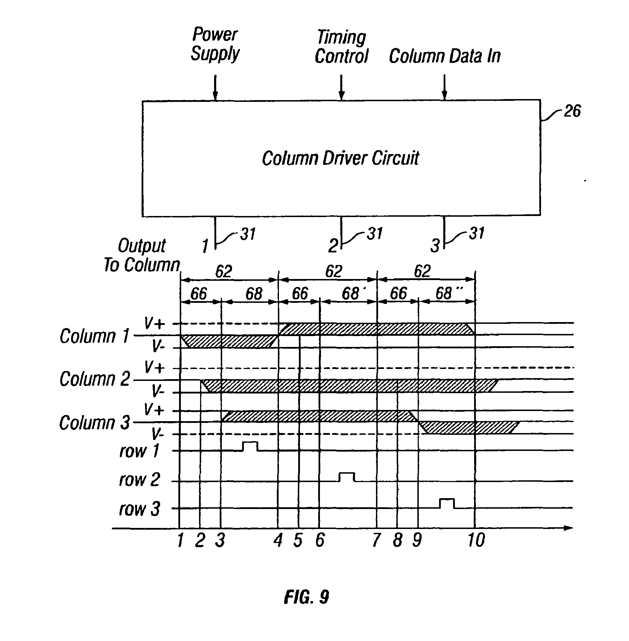

One embodiment of a circuit for staggering the assertion of two or more column signals for a row-column array of modulators is shown in Figure 8, which shows the column driver circuit 26 of Figure 2 with outputs to exemplary columns 1, 2, 3, and N. The driver circuit 26 includes a shift register 25 that can be loaded with data indicating desired values for the columns at a particular time. The driving circuit 26 is connected to a data latch 27, which receives the data from the shift register 25 and asserts signals on one or more column electrodes based on the data stored in the shift register 25. According to this embodiment, the latch 27 has a data input, a clock input, a power input and an output to the array. In one embodiment, the latch 27 is configured so that when an event occurs, e.g., when the clock input to the latch 27 is active (e.g., upon detection of a leading edge of a clock pulse), the data provided to the input of the latch 27 is "latched," e.g., signals are asserted on the outputs of the latch 27 and provided to the connected column electrodes. The latch 27 can be configured so that the output of the latch 27 retains its data value until an event occurs again, e.g., the clock goes active again. In another embodiment, the data is latched when the clock input to the latch 27 goes inactive (e.g., detection of a falling edge of a clock pulse). The output of the latch 27 then retains its data value until the clock goes inactive again.

Column data is loaded into the shift register 25, shifting the column data down the shift register 25 until it is "full," at which time the data is ready to be latched. In this embodiment, instead of applying a column enable signal to the entire latch 27 causing the latch to assert the desired signals on all the column electrodes simultaneously, in this embodiment the driving circuit 26 is configured to provide a 'rolling enable,' e.g., to stagger the time when the latch 27 asserts the signals on the column electrodes. For example, in one embodiment the driving circuit 26 can include circuitry referred to herein functionally as a latch enable register 29, which is connected to the latch 27 and enables the latch 27 to assert staggered signals on the column electrodes.

It is appreciated that various circuits can be used to implement 'rolling enable;' for example the circuits can have built in delays for each output of the latch 27 or the latch 27 can be configured to assert a signal to one or more column electrodes based on an input which controls the latch 27 outputs. In various embodiments, the latch 27 can stagger the assertion of signals to the columns such that signals can be asserted individually, for example, column-by-column, or in two or more groups of columns, where, for example, each group of columns ("group") contains one or more columns. The latch 27 asserts a signal on each column in a group during a certain time-span, referred to herein as a group addressing period, which occurs during a column addressing period within an array addressing period.

As used herein, the term "group addressing period" is a broad term, and is used to describe a time period during which a signal is first asserted on each column electrode in a group of columns of a row-column array. As used herein, the term "column addressing period" is a broad term, and is used to describe a time period during which a signal is first asserted on the each electrode of the desired column(s). As used herein, the term "row addressing" period is a broad term, and is used to describe a time period during which a signal (e.g., strobe or pulse) is asserted on one row of a row-column array. As used herein, the term "array addressing period" is a broad term, and is used to describe a time period that includes a column addressing period and a row addressing period. It will be appreciated that when a signal is asserted on a column during the column addressing period, the signal can be sustained during the row addressing period so that an asserted row signal can change a pixel corresponding to a particular row and column. For any particular column group, its addressing period can be at least slightly different then the addressing period of one or more other groups. The columns of an array can be formed into two or more groups, each group having one or more columns. The group addressing periods can overlap or be temporally distinct. If the group addressing periods overlap, the portion of overlap between any of the groups can be identical or can be different. The group addressing periods can be in a predetermined order, for example, sequential order of the columns, or in a random order. These and other embodiments of the invention are also described in greater detail hereinbelow.

Figure 9 illustrates one embodiment of an exemplary timing diagram for row and column signals that may be used to write a 3x3 interferometric display using a staggered drive scheme for asserting a signal on each column electrode. In this scheme, signals are asserted on each column electrode in a staggered sequence, or on two or more groups of column electrodes in a staggered sequence (e.g., the column electrodes are configured as two or more groups so that a signal is asserted on each column electrode in the group at substantially the same time). Within an array addressing period 62 is a column addressing period 66 and a row addressing period 68. The time-span of the array addressing period 62 can be of various lengths and can be application dependent. Correspondingly, the time-span of the column address period 66 and the row address period 68 can also be of various lengths. For example, in one embodiment the time-span of the array addressing period 62 can be about 500 microseconds, the column addressing period 66 can be about 400 microseconds, and the row addressing period can be about 100 microseconds. If the latch staggers its output column-by-column so that it asserts a signal on another column electrode every 2 microseconds, one row of a display could be updated during the 500 microsecond array addressing period 62, and a 200 row display can be updated in about one-tenth of a second, in this example.

Still referring to Figure 9, the output of the column driver 26 is a signal which is asserted on each of the three column electrodes 31. At time 1, the column driver circuit 26 asserts a signal on column 1 which is sustained until time 4. At time 2, the column driver circuit 26 asserts a signal on column 2 which is sustained until time 5, and at time 3 the column driver circuit 26 asserts a signal on column 3 which is sustained until time 6. Accordingly, during the period between time 3 and time 4, signals are asserted on all three columns. The time period between time 3 and time 4 corresponds with a row 1 addressing period 68, during which a strobe is applied to row 1 which actuates or releases the pixels of row 1 according to the signals asserted on the columns. This same process can be repeated for each row, so that a strobe applied to row 2 during the row 2 addressing period 68' (between time 6 and time 7) and to row 3 during the row 3 addressing period 68" (between time 9 and time 10).

As illustrated in this example, the output of the column driver circuit 26 for columns 1 and 2 are first set to -V_{bias} and the output to column 3 is set to +V_{bias}. When a positive row pulse is applied to row 1 the (1,1) and (1,2) pixels are actuated, and the (1,3) pixel is released. The output of the column driver circuit 26 for columns 1 and 3 are then set to +V_{bias} and the output to column 2 is set to -V_{bias}. Applying a positive row pulse to row 2 releases the (2,1) and (2,1) pixels and actuates the (2, 2) pixel. The output of the column driver circuit 26 for columns 2 and 3 are then set to -V_{bias} and the output to column 1 is set to +V_{bias·} Applying a positive row pulse to row 2 releases the (3,1) pixel and actuates the (3, 2) and (3,3) pixel. The resulting pixel configuration of this example is the same as illustrated in Figure 5A.

In some embodiments, the driving circuit 26 can stagger signals to two or more groups during the column addressing period which can also reduce the current spike, even if columns within the group are asserted substantially simultaneously. This embodiment may be particularly useful in displays with a large number of columns. In some embodiments, columns 1-N are clustered into groups where each group includes a certain number of columns, e.g., four columns. Signals are asserted on the column electrodes for the columns in each group at least substantially simultaneously, e.g., during the same group addressing period. The driver circuit 26 asserts signals for a first group during a first group addressing period, then asserts signals for a second group during a second group addressing period, etc., until signals are asserted for all groups. In other embodiments, the number of columns in each group can be one, two, three, or more than four.

In some embodiments where the columns are configured into groups, each of the groups can have the same number of columns. However, in some embodiments, the number of columns in each group can be different, or some groups may have the same number of columns and other groups may have a different number of columns. For example, in an eight column display, a first group can include columns 1 and 2, a second group can include just column 3, and a third group can include columns 4, 5, 6, 7, and 8.

In some embodiments, the driver circuit 26 asserts signals for the columns sequentially (e.g., column 1, column 2, etc.). In other embodiments the signals are asserted in a non-sequential order (e.g., column 3, column 1, column 2, etc.). In embodiments when the columns are configured into two or more groups, signals can be asserted for each group in a in a sequential or a non-sequential order. For example, signals can first be asserted for the columns in a first group that includes column 3, then a second group that includes columns 4, 5, 6, and 7, and finally a third group that includes columns I and 2. In some embodiments, the order of one or more of the groups is predetermined, in some embodiments the order of one or more groups is random, while in other embodiments the order of the groups can be a combination of predetermined and random.

At least a portion of the group addressing period for each group overlaps so that a strobe can be applied to a row actuating the desired interferometric modulators for that row during the overlap period (e.g., the row addressing period). The relative start of each group addressing period can be configured to affect the amount of current that is needed at any one time during the column addressing period.

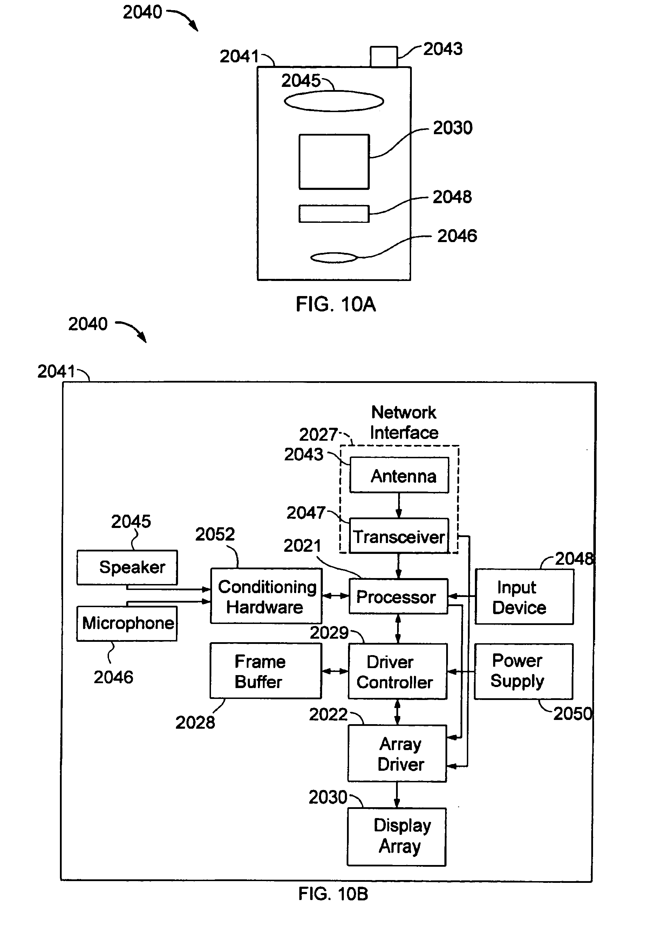

Figures 10A and 10B are system block diagrams illustrating an embodiment of a display device 2040. The display device 2040 can be, for example, a cellular or mobile telephone. However, the same components of display device 2040 or slight variations thereof are also illustrative of various types of display devices such as televisions and portable media players.

The display device 2040 includes a housing 2041, a display 2030, an antenna 2043, a speaker 2045, an input device 2048, and a microphone 2046. The housing 2041 is generally formed from any of a variety of manufacturing processes as are well known to those of skill in the art, including injection molding, and vacuum forming. In addition, the housing 2041 may be made from any of a variety of materials, including but not limited to plastic, metal, glass, rubber, and ceramic, or a combination thereof. In one embodiment the housing 2041 includes removable portions (not shown) that may be interchanged with other removable portions of different color, or containing different logos, pictures, or symbols.

The display 2030 of exemplary display device 2040 may be any of a variety of displays, including a bi-stable display, as described herein. In other embodiments, the display 2030 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 2030 includes an interferometric modulator display, as described herein.

The components of one embodiment of exemplary display device 2040 are schematically illustrated in Figure 10B. The illustrated exemplary display device 2040 includes a housing 2041 and can include additional components at least partially enclosed therein. For example, in one embodiment, the exemplary display device 2040 includes a network interface 2027 that includes an antenna 2043 which is coupled to a transceiver 2047. The transceiver 2047 is connected to the processor 2021, which is connected to conditioning hardware 2052. The conditioning hardware 2052 may be configured to condition a signal (e.g. filter a signal). The conditioning hardware 2052 is connected to a speaker 2045 and a microphone 2046. The processor 2021 is also connected to an input device 2048 and a driver controller 2029. The driver controller 2029 is coupled to a frame buffer 2028 and to the array driver 2022, which in turn is coupled to a display array 2030. A power supply 2050 provides power to all components as required by the particular exemplary display device 2040 design.

The network interface 2027 includes the antenna 2043 and the transceiver 2047 so that the exemplary display device 2040 can communicate with one or more devices over a network. In one embodiment the network interface 2027 may also have some processing capabilities to relieve requirements of the processor 2021. The antenna 2043 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 2047 pre-processes the signals received from the antenna 2043 so that they may be received by and further manipulated by the processor 2021. The transceiver 2047 also processes signals received from the processor 2021 so that they may be transmitted from the exemplary display device 2040 via the antenna 2043.

In an alternative embodiment, the transceiver 2047 can be replaced by a receiver. In yet another alternative embodiment, network interface 2027 can be replaced by an image source, which can store or generate image data to be sent to the processor 2021. For example, the image source can be a digital video disc (DVD) or a hard-disc drive that contains image data, or a software module that generates image data.

Processor 2021 generally controls the overall operation of the exemplary display device 2040. The processor 2021 receives data, such as compressed image data from the network interface 2027 or an image source, and processes the data into raw image data or into a format that is readily processed into raw image data. The processor 2021 then sends the processed data to the driver controller 2029 or to frame buffer 2028 for storage. Raw data typically refers to the information that identifies the image characteristics at each location within an image. For example, such image characteristics can include color, saturation, and gray-scale level.

In one embodiment, the processor 2021 includes a microcontroller, CPU, or logic unit to control operation of the exemplary display device 2040. Conditioning hardware 2052 generally includes amplifiers and filters for transmitting signals to the speaker 2045, and for receiving signals from the microphone 2046. Conditioning hardware 2052 may be discrete components within the exemplary display device 2040, or may be incorporated within the processor 2021 or other components.

The driver controller 2029 takes the raw image data generated by the processor 2021 either directly from the processor 2021 or from the frame buffer 2028 and reformats the raw image data appropriately for high speed transmission to the array driver 2022. Specifically, the driver controller 2029 reformats the raw image data into a data flow having a raster-like format, such that it has a time order suitable for scanning across the display array 2030. Then the driver controller 2029 sends the formatted information to the array driver 2022. Although a driver controller 2029, such as a LCD controller, is often associated with the system processor 2021 as a stand-alone Integrated Circuit (IC), such controllers may be implemented in many ways. They may be embedded in the processor 2021 as hardware, embedded in the processor 2021 as software, or fully integrated in hardware with the array driver 2022.

Typically, the array driver 2022 receives the formatted information from the driver controller 2029 and reformats the video data into a parallel set of waveforms that are applied many times per second to the hundreds and sometimes thousands of leads coming from the display's x-y matrix of pixels.

In one embodiment, the driver controller 2029, array driver 2022, and display array 2030 are appropriate for any of the types of displays described herein. For example, in one embodiment, driver controller 2029 is a conventional display controller or a bi-stable display controller (e.g., an interferometric modulator controller). In another embodiment, array driver 2022 is a conventional driver or a bi-stable display driver (e.g., an interferometric modulator display). In one embodiment, a driver controller 2029 is integrated with the array driver 2022. Such an embodiment is common in highly integrated systems such as cellular phones, watches, and other small area displays. In yet another embodiment, display array 2030 is a typical display array or a bi-stable display array (e.g., a display including an array of interferometric modulators).

The input device 2048 allows a user to control the operation of the exemplary display device 2040. In one embodiment, input device 2048 includes a keypad, such as a QWERTY keyboard or a telephone keypad, a button, a switch, a touch-sensitive screen, a pressure- or heat-sensitive membrane. In one embodiment, the microphone 2046 is an input device for the exemplary display device 2040. When the microphone 2046 is used to input data to the device, voice commands may be provided by a user for controlling operations of the exemplary display device 2040.

Power supply 2050 can include a variety of energy storage devices as are well known in the art. For example, in one embodiment, power supply 2050 is a rechargeable battery, such as a nickel-cadmium battery or a lithium ion battery. In another embodiment, power supply 2050 is a renewable energy source, a capacitor, or a solar cell, including a plastic solar cell, and solar-cell paint. In another embodiment, power supply 2050 is configured to receive power from a wall outlet.

In some implementations control programmability resides, as described above, in a driver controller which can be located in several places in the electronic display system. In some cases control programmability resides in the array driver 2022. Those of skill in the art will recognize that the above-described optimization may be implemented in any number of hardware and/or software components and in various configurations.

While the above detailed description has shown, described, and pointed out novel features of the invention as applied to various embodiments, it will be understood that various omissions, substitutions, and changes in the form and details of the device or process illustrated may be made by those skilled in the art without departing from the spirit of the invention. The scope of the invention is indicated by the appended claims rather than by the foregoing description. All changes which come within the meaning and range of equivalency of the claims are to be embraced within their scope.

## Claims

1. A device, comprising:
means for displaying an image;
means for applying a series of sets of column signals to said displaying means;
means for strobing portions of said displaying means; and
means for staggering the application of column signals during the process of applying at least one set of column signals.

2. The device of Claim 1, wherein the displaying means comprise an array of interferometric modulators.

3. The device of Claim 1, additionally comprising a driving circuit configured to control the displaying means.

4. The device of Claims 1 or 2, wherein the applying means comprise at least one of a switch and a column driving circuit.

5. The device of Claims 1, 2, or 4, wherein the strobing means comprise at least one of a switch and a row driving circuit.

6. The device of Claims 1, 2, 4, or 5, wherein the staggering means comprise at least one of a latch and a shift register.

7. The device of Claim 1, wherein:
the displaying means comprise an array of interferometric modulators disposed in a plurality of columns and rows; and
the driving means comprise a driving circuit coupled to said array, wherein the applying means comprise a column driving circuit configured to apply a series of sets of column signals to said columns in accordance with a series of rows of image data, and wherein the strobing means comprise a row driving circuit configured to strobe each row of said array when a corresponding set of column signals is applied to said columns such that said driving circuit writes image data to said array a row at a time.

8. The device of Claim 7, wherein the driving circuit staggers the application of a signal for two or more columns in a column addressing period, and wherein the driving circuit is further configured to strobe one or more rows with a signal during a row addressing period.

9. The device of Claim 8, wherein said driving circuit is further configured to apply signals on two or more groups of columns, each group having a group addressing period during the column addressing period, and each group having one or more columns, wherein the group addressing period of each group is at least partially different than the group addressing period of at least one other group.

10. The device of Claim 8, wherein said driving circuit is further configured to apply signals on two or more groups of columns, each group being activated during a group addressing period within the column addressing period, and each group having one or more columns.

11. The device of Claim 9, wherein said driving circuit is further configured to apply signals for two or more groups of columns, each group being activated during a group addressing period within a column addressing period, each group having one or more columns, wherein the start time for each group addressing period is temporally distinct.

12. The device of Claim 7, wherein said driving circuit is further configured to apply a signal for a first column during a first time period and a second column during a second time period, wherein at least a portion of the first time period and the second time period occur at different times.

13. The device of Claim 7, wherein each group has one column.

14. The device of Claim 9, wherein said driving circuit applies signals for each group in a predetermined order.

15. The device of Claim 9, wherein said driving circuit applies signals for one or more groups in a predetermined order.

16. The device of Claim 9, wherein said driving circuit applies signals for one or more groups in a random order.

17. The device of Claim 9, wherein each group comprises the same number of columns.

18. The device of Claim 9, wherein one or more groups comprise a different number of columns.

19. The device of Claim 7, wherein said driving circuit applies signals for each column in a sequential order.

20. The device of Claim 7, wherein said driving circuit applies signals for least two or more columns in a non-sequential order.

21. The device of Claim 7, wherein said driving circuit is configured to receive column data for the plurality of columns, and said driving circuit is further configured to stagger the application of a signal for two or more columns during a column addressing period and to apply a signal on each of one or more rows during a row addressing period.

22. The device of Claim 7, wherein the driving circuit comprises:
a storage device to store predetermined display data; and
a signal device in data communication with said storage device, said signal device configured to apply a signal on each column electrode of two or more columns at different times, wherein the signals are based on the predetermined display data.

23. The device of Claim 1, further comprising:
a processor that is in electrical communication with said displaying means, said processor being configured to process image data; and
a memory device in electrical communication with said processor.

24. The device of Claim 23, further comprising:
a controller configured to send at least a portion of said image data to said driving circuit.

25. The device of Claim 23, further comprising:
an image source module configured to send said image data to said processor.

26. The device of Claim 25, wherein said image source module comprises at least one of a receiver, transceiver, and transmitter.

27. The device of Claim 23, further comprising:
an input device configured to receive input data and to communicate said input data to said processor.

28. A method of driving a display comprising an array of rows and columns of display elements, the method comprising:
applying to a first group of one or more columns of display elements a first set of one or more column signals;
applying to a second group of one or more columns of display elements a second set of one or more column signals, wherein the first and second sets of column signals are applied at different times; and
strobing a first row of display elements with a first row signal.

29. The method of Claim 28, wherein strobing the first row of display elements occurs while said first and second sets of column signals are applied.

30. The method of Claim 28, further comprising:
applying to a third group of one or more columns of display elements a third set of one or more column signals;
applying to a fourth group of one or more columns of display elements a fourth set of one or more column signals, wherein the third and fourth sets of column signals are applied at different times; and
strobing a second row of display elements with a second row signal.

31. The method of Claim 30, wherein strobing the second row of display elements occurs while said third and fourth sets of column signals are applied.

32. The method of Claim 28, further comprising:
applying to said first group of one or more columns of display elements a third set of one or more column signals;
applying to said second group of one or more columns of display elements a fourth set of one or more column signals, wherein the third and fourth column signals are applied at different times; and
strobing a second row of display elements with a second row signal.

33. The method of Claim 32, wherein strobing the second row of display elements occurs while said third and fourth sets of column signals are applied.

34. The method of Claim 32, wherein said first and second row signals are applied at different times.

35. The method of Claims 28, 29, 30, 31, 32, 33, or 34 wherein said display elements are interferometric modulators.
